# DEMANDE DE BREVET EUROPEEN

(11) **EP 0 559 558 A1**
(43) Date de publication de la demande: **08.09.1993**
(21) Numéro de dépôt: 93400548.9
(22) Date de dépôt: 03.03.1993
(51) Int. Cl.: G01N 35/06, G01N 35/04, B01D 29/00, B01L 3/14, B65D 39/00

(54) **Filtration et identification automatique d'échantillons**

(30) Priorité: 04.03.1992 FR 9202600
(71) Demandeur: Marteau d'Autry, Eric, F-75004 Paris (FR)
(72) Inventeur: Marteau d'Autry, Eric, F-75004 Paris (FR)
(74) Mandataire: Ahner, Francis

(57) **Abrégé**

La présente invention concerne un automate de laboratoire, de type XYZ, comprenant notamment, sous le contrôle informatique, différents éléments périphériques appropriés pour l'analyse et/ou la préparation d'échantillons liquides, un plan de travail (1) comprenant des moyens supports appropriés (2) d'éléments nécessaires à l'analyse et/ou la préparation d'échantillons, associé à un dispositif adapté de prélèvement, consititué d'une aiguille (5), reliée à une seringue automatique, disposée verticalement sur un bras de prélèvement approprié (3,4) assurant le déplacement de l'aiguille selon les trois axes orthogonaux X, Y et Z définissant les trois dimensions de l'espace, dont les éléments particuliers nécessaires à l'analyse sont déplacés d'un point quelconque du plan de travail (1) à un autre point déterminé, en programmant les moyens de commande de l'aiguille pour un tel déplace-ment, par coopération active de la partie inférieure de l'aiguille (5) avec un organe d'obturation approprié (8) temporairement solidaire de l'élément à déplacer, l'organe d'obturation (8) exerçant sur l'extérieur de la partie inférieure de l'aiguille (5) les forces de frottement nécessaire à la liaison momentanée de l'élément à déplacer de l'aiguille (5) qui assure le transport d'un point à un autre du plan de travail (1).

La présente invention concerne également les éléments à déplacer, et un procédé d'identification et/ou de filtration des échantillons liquides.

## Description

La présente invention concerne l'automatisation du transport d'éléments nécessaires à l'analyse et celle de l'identification des échantillons par un automate de laboratoire pour l'analyse et/ou la préparation d'échantillons liquides.

Les automates de laboratoire pour l'analyse et/ou la préparation d'échantillons liquides comprennent généralement une unité centrale informatisée qui pilote différents éléments 'périphériques comme par exemple l'alimentation d'une colonne de chromatographie, un détecteur de signal en sortie de colonne, un logiciel de traitement de données, et pour automatiser le travail d'analyse et/ou de préparation, un plan de travail supportant des moyens support des éléments nécessaires à l'analyse et/ou la préparation, associé à un dispositif de prélèvement, capable de transférer dans un ordre pré-établi et contrôlé par l'unité centrale un liquide d'un récipient à un autre, les deux récipients étant situés sur le plan de travail.

Les dispositifs de prélèvement sont généralement constitués par un aiguille reliée à une seringue automatique disposée verticalement sur un bras de prélèvement guidé par l'unité centrale pour se déplacer horizontalement au-dessus du plan de travail selon des coordonnées pré-définies, et verticalement, notamment pour plonger dans le récipient au niveau du liquide à prélever. On parlera dans ce cas d'automates ou robots XYZ, par référence aux possibilités de déplacements de l'aiguille dans les trois dimensions de l'espace.

Lorsque l'aiguille est en position basse, l'unité centrale commande alors à la seringue d'aspirer ou d'éjecter le liquide, suivant que l'on cherche à prélever dans un récipient ou à l'éjecter dans un autre récipient.

Les différents récipients sont généralement des tubes disposés en réseau afin de faciliter l'entrée des coordonnées spatiales de chaque récipient dans l'unité centrale.

De tels systèmes de prélèvement et d'analyse et leur principe de fonctionnement sont décrits dans la littérature, notamment dans **WO-A-83 04 325** (GILSON MEDICAL ELECTRONICS).

L'automatisation des analyses a été améliorée par divers systèmes d'agencement du plan de travail, notamment par des systèmes de portoirs d'éléments de filtration et/ou de purification des échantillons, notamment ceux décrits dans **EP-A-0 180 511** (E. MARTEAU D'AUTRY).

Le plan de travail est alors équipé de premiers moyens supports, supportant par exemple des cartouches préparatives, superposés à des seconds moyens supports, recevant par exemple pour une partie des éprouvettes et pour une seconde partie une gouttière d'évacuation.

Les premiers moyens supports sont mobiles transversalement au-dessus des seconds et peuvent être déplacés linéairement sous l'action de l'aiguille de prélèvement.

On constate donc que l'aiguille des robots XYZ est employée non seulement comme moyen de prélèvement et d'éjection d'échantillons liquides, mais également comme moyen de déplacement linéaire horizontal d'éléments placés sur un portoir.

Bien qu'ayant atteint un niveau d'automatisation appréciable pour l'utilisateur, l'intérêt de ces robots XYZ résidant essentiellement dans la possibilité d'effectuer un nombre important d'opérations répétitives et fastidieuses, reproductibles indéfiniment comme le prélèvement d'un échantillon liquide et son injection dans une colonne de chromatographie, il était nécessaire d'améliorer le fonctionnement des robots XYZ, en particulier en leur permettant de transférer des éléments d'un point à un autre du plan de travail, sans qu'il soit nécessaire de passer par l'intermédiaire d'un portoir susceptible d'un déplacement limité le long d'un axe horizontal unique.

Une telle liberté de déplacement passe donc nécessairement par une possibilité de déplacement d'éléments non seulement horizontalement dans le long d'un axe unique, mais également verticalement et horizontalement le long d'un axe perpendiculaire au premier, c'est-à-dire dans les trois dimensions X,Y et Z de l'espace.

Dans ce but, on peut imaginer d'ajouter au robot XYZ un bras automatisé muni d'un moyen de préhension adapté pouvant prendre un élément pour le transférer en tout point défini à l'avance du plan de travail. Une telle solution facilement réalisable techniquement, présente néanmoins de nombreux inconvénients, particulièrement au niveau de la gestion de l'espace de travail et des coûts supplémentaires apportés par l'ajout d'un tel bras.

Or, il a été trouvé d'une manière inattendue que de tels déplacements d'objets dans les trois dimensions X,Y et Z pouvaient être obtenus sur les robots, sans ajout d'éléments particuliers, en programmant les moyens de commande de l'aiguille pour un tel déplacement, par coopération active de la partie inférieure de l'aiguille avec un organe d'obturation approprié temporairement solidaire de l'élément à déplacer, l'organe d'obturation exerçant sur l'extérieur de la partie inférieure de l'aiguille les forces de frottement nécessaire à la liaison momentanée de l'élément à transporter et de l'aiguille, la force de préhension proprement dite étant assurée par l'organe d'obturation de l'élément à déplacer.

Un tel élément d'obturation approprié peut être un bouchon septum, employé usuellement notamment pour l'obturation des éprouvettes contenant les liquides à analyser.

En effet, les bouchons septum présentent en leur centre une paroi circulaire élastique de faible épaisseur qui peut être aisément percée, cette paroi de faible épaisseur pouvant également être pré-percée, de manière à faciliter la pénétration de l'aiguille d'une seringue.

Le diamètre de la paroi est inférieur à celui de l'aiguille, laquelle doit forcer pour traverser le bouchon. Cette force entraine une force opposée par réaction, provenant du bord circulaire de la paroi et permet l'adhésion du bouchon septum à l'aiguille, et par conséquent, de l'élément à déplacer à l'aiguille.

Comme nous l'avons vu précédemment, les bouchons septum sont employés généralement pour l'obturation des tubes à essais contenant les échantillons à analyser. Ils peuvent aussi être adoptés à d'autres éléments pouvant être également employés pour la préparation des échantillons à analyser, comme, par exemple des porte-filtres ou des colonnes de chromatographie préparative.

Lorsque le bouchon septum est fixé sur une éprouvette contenant un échantillon liquide, il est alors possible selon l'invention ,de déplacer automatiquement l'éprouvette d'un point à un autre du plan de travail.

Il est fréquent de voir ces éprouvettes être équipées d'une étiquette comportant un code barre pour les identifier. Ces étiquettes sont appliquées sur l'éprouvette avant le prélèvement de l'échantillon liquide qui sera analysé ultérieurement au laboratoire. Le code barre, permet de retrouver ultérieurement par une simple opération de lecture par un moyen de lecture approprié, toutes les informations nécessaires à l'identification de l'échantillon à analyser, en particulier ses origines.

Il est donc possible, selon un mode particulier de réalisation de la présente invention de positionner sur le plan de travail un lecteur de code barre, permettant à l'automate d'identifier l'échantillon liquide avant d'effectuer une opération quelconque de purification, filtration ou d'analyse.

Ainsi, l'automate pourra venir chercher l'éprouvette sur son porte échantillon, la déplacer jusqu'au lecteur de code barre pour l'identifier et le rapporter à sa place initiale.

Ensuite, il pourra aspirer le liquide, retirer l'aiguille de l'éprouvette, la placer en un autre point approprié du plan de travail pour éjecter le liquide afin de lui faire subir une opération ultérieure, telle que par exemple une chromatographie HPLC.

Lorsque le liquide à analyser présente des impuretés solides qui peuvent être néfastes à son analyse ultérieure, il est nécessaire de le filtrer. Usuellement, on place un filtre sur une seconde éprouvette, l'automate allant prélever l'échantillon liquide pour l'éjecter dans le filtre, avant de réaspirer le liquide dans la seconde éprouvette.

Selon la technique antérieure, en particulier la demande de brevet **EP-A-0 180 511,** il était nécessaire de positionner préalablement le filtre sur un potoir mobile pouvant être déplacé transversalement au-dessus d'une éprouvette ou d'un égoutoir.

Selon la présente invention, lorsque le porte-filtre est équipé d'un bouchon septum dans sa partie supérieure, on peut définir une zone de stockage des porte-filtres sur le plan de travail et une gouttière de récupération après usage, l'automate pouvant lorsque cela est nécessaire aller chercher un porte-filtre dans sa zone de stockage, le placer sur une éprouvette particulière, libérer le liquide dans le porte-filtre, le retirer lorsque la totalité du liquide a été traitée, et enfin, reprendre le porte-filtre et l'apporter dans la goutière où il sera relaché et récupéré.

La présente invention concerne également un élément mobile destiné à être placé sur le plan de travail d'un automate de type XYZ défini précédemment, équipé à son extrémité supérieure d'une butée appropriée, temporairement solidaire, assurant avec l'extérieur de la partie inférieure de l'aiguille du robot un moyen d'assurer son déplacement d'un point à un autre du plan de travail par l'intermédiaire de l'aiguille.

D'une manière avantageuse, la butée appropriée est un organe d'obturation, de préférence un bouchon de type bouchon septum défini précédemment.

Les éléments mobiles selon l'invention sont généralement de manière préférentielle des éprouvettes munies d'étiquettes à code-barre, ou également des porte-filtres munis d'éléments de filtration.

Les figures 1 à 6 en annexe permettront de mieux définir la présente invention par des modes de réalisations préférentielles, sans toutefois chercher à en limiter la portée.

La figure 1 représente la partie active d'un robot XYZ, comportant un plan de travail (1), un système mobile de support de différents éléments (2), un bras horizontal 3 de support de l'aiguille, assurant ses déplacements horizontaux XY, un bras vertical (4) de support de l'aiguille, assurant ses déplacements verticaux Z, une aiguille de prélèvement (5), reliée à une seringue automatique par l'intermédiaire d'un capillaire flexible (6).

la figure 2 représente la vue en coupe d'une éprouvette (7) munie d'un bouchon septum (8) et son échantillon liquide (9).

La figure 3 représente la vue en coupe d'un filtre (10) et son support (11) équipés sur leur partie supérieure d'un bouchon septum (8).

D'une manière avantageuse, le porte-filtres est constitué de deux cônes creux reliés entre eux par leur base, par l'intermédiaire d'un élément de filtration (10), leurs sommets étant percés pour laisser passage à un liquide, l'une des extrémités servant de base au porte-filtre, l'autre étant destinée à recevoir l'organe d'obturation approprié (8).

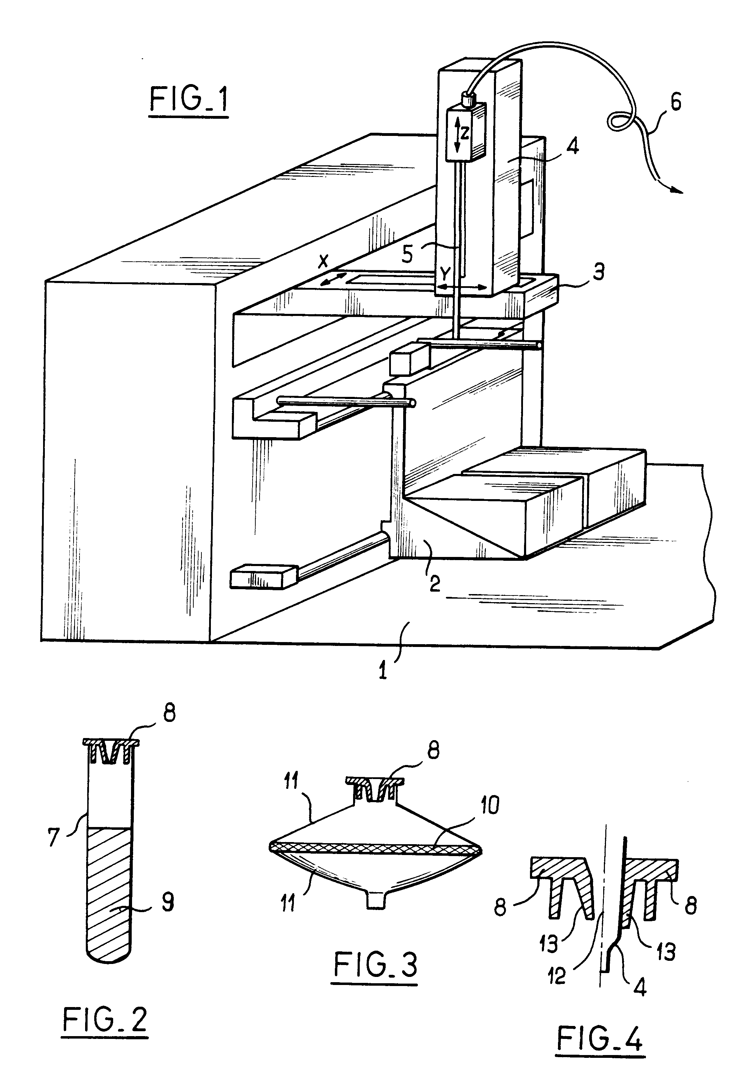

La figure 4 représente la vue en coupe détaillée du bouchon septum (8), traversé par une aiguille (4), sous la forme d'un bouchon obturateur (8) portant un orifice axial (12) recevant l'aiguille (4) lorsque celle-ci est abaissée au centre du bouchon (l'évasement conique facilite le guidage de l'aiguille lors de la descente de celle-ci).

Les dimensions de l'orifice axial (12) et l'élasticité de l'obturateur (13) sont choisies de manière que, lorsque l'aiguille a entièrement pénétré le bouchon, la fermeture étanche ainsi obtenue assure une force suffisante pour le déplacement de l'élément choisi.

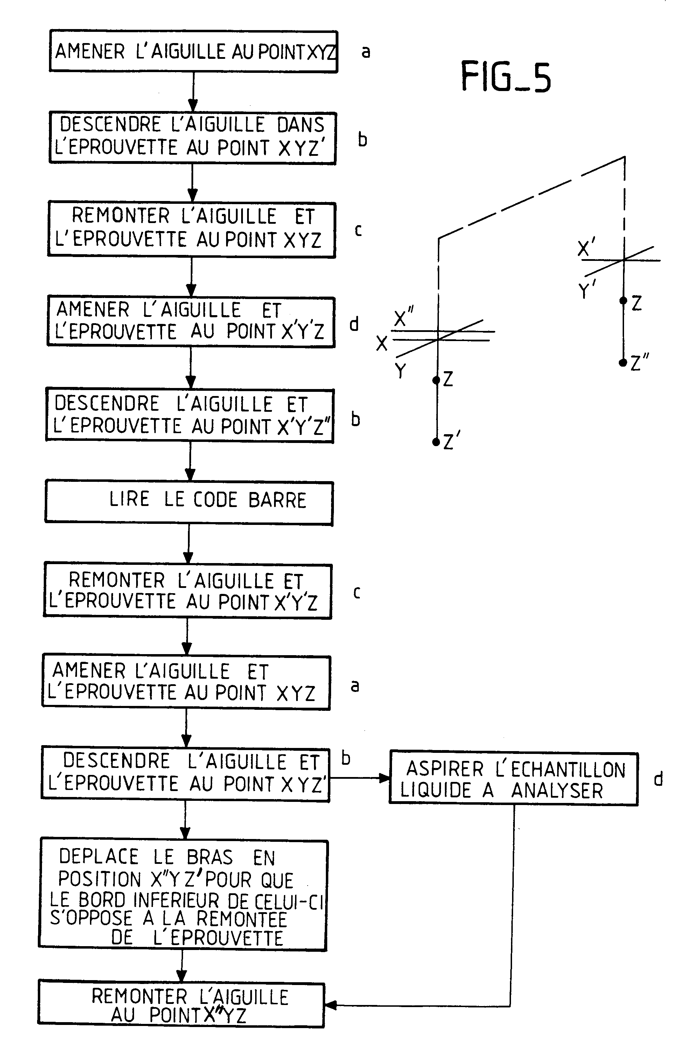

La figure 5 représente l'organigramme d'une opération automatique d'identification d'un échantillon dans une éprouvette équipée d'une étiquette à code barre.

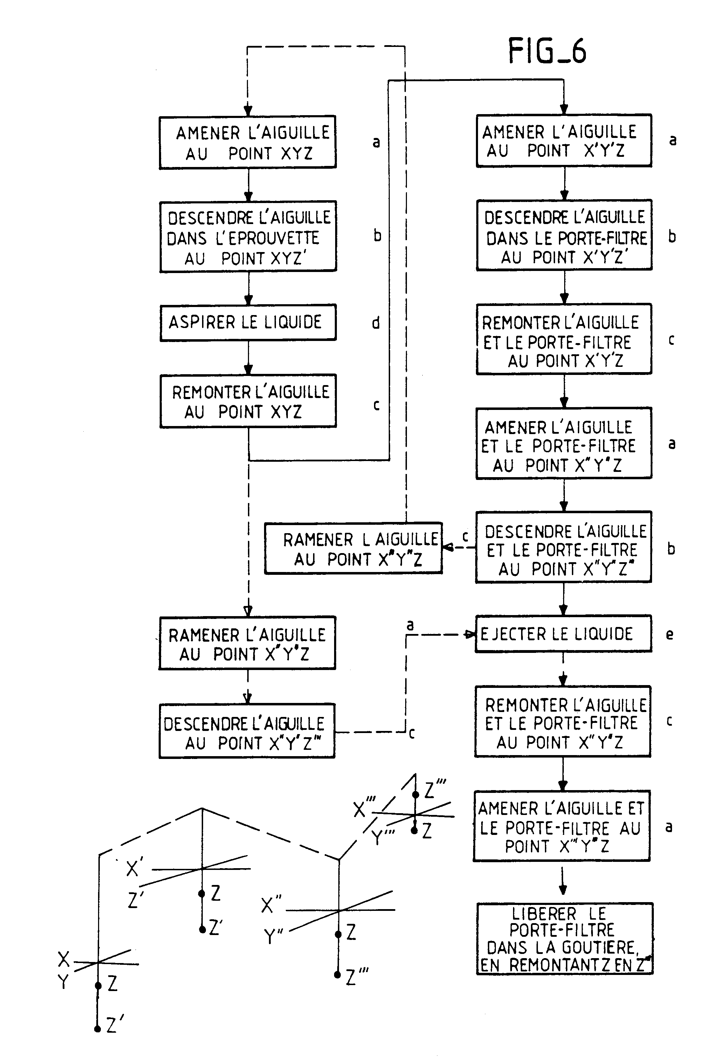

La figure 6 représente deux organigrammes possibles de filtrage automatique d'un échantillon liquide avant son analyse.

Comme on peut le remarquer sur les figures 5 et 6, seule la présence d'éléments transportables équipés d'un élément d'obturation appropriée est nécessaire à la mise en oeuvre de la présente invention.

Pour les opérations de déplacement des éléments, l'automate effectuera les trois mouvements fondamentaux usuels de déplacement de l'aiguille :
a/ positionnement de l'aiguille à un point XYZ,
b/ descente de l'aiguille à un point XYZ.
c/ remontée de l'aiguille à un point XYZ ou XYZ",

répétées autant de fois que nécessaire, XYZ étant les coordonnées de l'extrémité inférieure de l'aiguille.

La présente invention concerne donc aussi un procédé d'identification d'un échantillon liquide (9) contenu dans une éprouvette (7) par un automate de type XYZ défini précédemment, pour lequel l'éprouvette (7), munie d'une étiquette à code barre et à son extrémité supérieure d'un organe d'obturation approprié (8) temporairement solidaire, est transportée par l'intermédiaire de l'aiguille (5) de prélèvement de l'automate XYZ, par coopération active de la partie inférieure de l'aiguille (5) avec l'organe d'obturation approprié (8), de son support sur le plan de travail (1) vers un emplacement déterminé du plan de travail (1) équipé d'un moyen approprié de lecture des codes barre, puis une fois la lecture du code barre effectuée, rapportée dans son support d'origine.

Elle concerne enfin un procédé de filtration automatique d'un échantillon liquide (9) contenu dans une éprouvette, par un automate de type XYZ définie précédemment, pour lequel l'automate, par l'intermédiaire de l'aiguille (5) de prélèvement effectue les opérations suivantes de :
- aspiration de l'échantillon liquide (9) dans une éprouvette (7),
- transport du porte-filtre (11) muni à son extrémité supérieure d'un organe d'obturation approprié (8) temporairement solidaire, d'une zone de stockage déterminée sur le plan de travail (1), sur une seconde éprouvette (7) située à un point déterminé sur le plan de travail (1),
- éjection du liquide (9) dans le porte-filtre (11) de manière à récupérer le liquide filtré dans la seconde éprouvette (7),
- transport du porte-filtre (11) de la seconde éprouvette (7) vers une gouttière de récupération située à un point déterminé du plan de travail (1) où le porte-filtre (11) est libéré.

L'homme de l'art saura adapter les automates existants, en particulier pour permettre le retrait de l'aiguille de l'élément à transporter, une fois l'opération de transport désirée effectuée, comme par exemple en adaptant une butée rétractable sur le bras mobile de support de l'aiguille, ou en déplaçant latéralement le bras avant que l'aiguille ne remonte hors de l'éprouvette, ou en ayant une butée fixe sur le mouvement XY suffisamment haute ou tout autre moyen.

## Revendications

**1/** Automate de laboratoire, de type XYZ, comprenant notamment, sous le contrôle informatique, différents éléments périphériques appropriés pour l'analyse et/ou la préparation d'échantillons liquides, un plan de travail (1) comprenant des moyens supports (2) appropriés d'éléments nécessaires à l'analyse et/ou la préparation des échantillons liquides, associé à un dispositif adapté de prélèvement, consititué d'une aiguille (5), reliée à une seringue automatique, disposée verticalement sur un bras de prélèvement approprié (4,5) assurant le déplacement de l'aiguille selon les trois axes orthogonaux X, Y et Z définissant les trois dimensions de l'espace, **caractérisé** en ce que les éléments particuliers nécessaires à l'analyse sont déplacés d'un point quelconque du plan de travail (1) à un autre point déterminé, en programmant les moyens de command de l'aiguille (5) pour un tel déplacement, par coopération active de la partie inférieure de l'aiguille (5) avec un organe d'obturation approprié temporairement solidaire de l'élément à déplacer, l'organe d'obturation exerçant sur l'extérieur de la partie inférieure de l'aiguille (5) les forces de frottement nécessaire à la liaison momentanée de l'élément à transporter et de l'aiguille (5) qui assure le déplacement d'un point à un autre du plan de travail (1).

**2/** Automate XYZ selon la revendication 1, **caractérisé** en ce que l'organe d'obturation est un bouchon de type bouchon septum (8).

**3/** Automate XYZ selon la revendication 2, **caractérisé** en ce que le bouchon septum (8) présente en son centre une paroi circulaire élastique (13) aisément perçable pouvant également être pré-percée (12) en son centre.

**4/** Automate XYZ selon la revendication 2, **caractérisé** en ce que la paroi circulaire élastique (13) a un diamètre inférieur à celui de l'aiguille qui le pénètre.

**5/** Automate XYZ selon l'une quelconque des revendications précédentes, **caractérisé** en ce que l'élément à déplacer est choisi parmi les éprouvettes (7) vides ou contenant l'échantillon liquide (9) à analyser, et les porte-filtres (11) comprenant un élément de filtration (10).

**6/** Automate XYZ selon la revendication 5, **caractérisé** en ce que l'élément à déplacer est une éprouvette (7) équipée d'une étiquette à code barre.

**7/** Automate XYZ selon l'une quelconque des revendications précédentes, **caractérisé** en ce qu'il comprend en un point déterminé du plan de travail (1) un moyen approprié de lecture des code-barre.

**8/** Elément mobile destiné à être placé sur le plan de travail (1) d'un automate de type XYZ d'analyse et/ou la'préparation d'échantillons liquides défini selon l'une des revendications 1 à 7, **caractérisé** en ce qu'il est équipé à son extrémité supérieure d'une butée appropriée temporairement solidaire, assurant avec l'extérieur de la partie inférieure de l'aiguille (5), un moyen d'assurer son déplacement d'un point à un autre du plan de travail (1) par l'intermédiaire de l'aiguille.

**9/** Elément mobile selon la revendication 8, **caractérisé** en ce que la butée appropriée est un organe d'obturation, de préférence un bouchon de type bouchon septum (8), présentant en son centre une paroi circulaire élastique (13) aisément perçable et pouvant être également pré-percée (12) en son centre, ladite paroi circulaire élastique ayant un diamètre inférieur à celui de l'aiguille qui la pénètre.

**10/** Elément mobile selon l'une des revendications 8 ou 9, **caractérisé** en ce qu'il s'agit d'une éprouvette (7) munie d'une étiquette à code barre.

**11/** Elément mobile selon l'une des revendications 8 ou 9, caractérisé en ce qu'il s'agit d'un porte-filtre (11) muni d'un élément de filtration (10).

**12/** Elément mobile selon la revendication 11, **caractérisé** en ce que le porte-filtre (11) est consititué de deux cônes creux reliés entre eux par leur base, par l'intermédiaire d'un élément de filtration, leurs sommets étant percés pour laisser passage à un liquide, l'une des extrémités servant de base au porte filtre, l'autre étant destinée à recevoir l'organe d'obturation approprié (8).

**13/** Procédé d'identification automatique d'échantillons liquides (9) contenus dans une éprouvette (7), par un automate de type XYZ selon l'une des revendications 1 à 7, **caractérisé** en ce que l'éprouvette (7), munie d'une étiquette à code barre et à son extrémité supérieure d'un organe d'obturation (8) approprié temporairement solidaire, est transportée par l'intermédiaire de l'aiguille de prélèvement (5) de l'automate XYZ, par coopération active de la partie inférieure de l'aiguille (5) avec l'organe d'obturation approprié (8), de son support sur le plan de travail (1) vers un emplacement déterminé du plan de travail (1) équipé d'un moyen approprié de lecture des codes barre, puis une fois la lecture du code barre effectuée, rapportée dans son support d'origine.

**14/** Procédé de filtration automatique d'un échantillon liquide (9) contenu dans une éprouvette (7), par un automate de type XYZ selon l'une des revendications 1 à 7, **caractérisé** en ce que l'automate, par l'intermédiaire de l'aiguille de prélèvement (5) effectue les opérations suivantes de :
- aspiration de l'échantillon liquide (9) dans une éprouvette (7),
- transport du porte-filtre (11) muni à son extrémité supérieure d'un organe d'obturation (8) approprié temporairement solidaire, d'une zone de stockage déterminée sur le plan de travail (1), sur une seconde éprouvette (7) située à un point déterminé du plan de travail (1),
- éjection du liquide dans le porte-filtre (11) de manière à récupérer le liquide filtré dans la seconde éprouvette (7),
- transport du porte-filtre (11) de la seconde éprouvette (7) vers une gouttière de récupération située à un point déterminé du plan de travail (1) où le porte-filtre est libéré.

**15/** Procédé selon la revendication 14, avec le porte filtre défini selon l'une des revendications 11 ou 12.
